# EUROPEAN PATENT APPLICATION

(11) **EP 1 762 839 A1**
(43) Date of publication of application: **14.03.2007**
(21) Application number: 06254286.5
(22) Date of filing: 16.08.2006
(51) Int. Cl.: G01N 21/55, G01N 33/487, C12Q 1/68

(54) **Integrated opto-electric sensor**

(30) Priority: 07.09.2005 US 222206
(71) Applicant: Agilent Technologies, Inc., Santa Clara, CA 95051 (US)
(72) Inventor: Bahl, Sandeep R, CO80537-0599 (US); Roitman, Daniel B., CO 80537-0599 (US)
(74) Representative: Jehan, Robert

(57) **Abstract**

An integrated opto-electric sensor includes a wavenumber matching structure (24) that is integrated onto a silicon substrate (26) and a first conductive electrode (17a) that is adjacent to one of a lightly doped and an undoped region (28) in the silicon substrate (26) to form a Schottky junction. A dielectric (30) is positioned adjacent to the first conductive electrode (17a), and a second conductive electrode (17b) is formed at the silicon substrate (17b) provide coupling for a detected signal that is provided in response to illumination of the wavenumber matching structure (24) by an optical signal.

## Description

The present invention relates to an integrated opto-electric sensor.

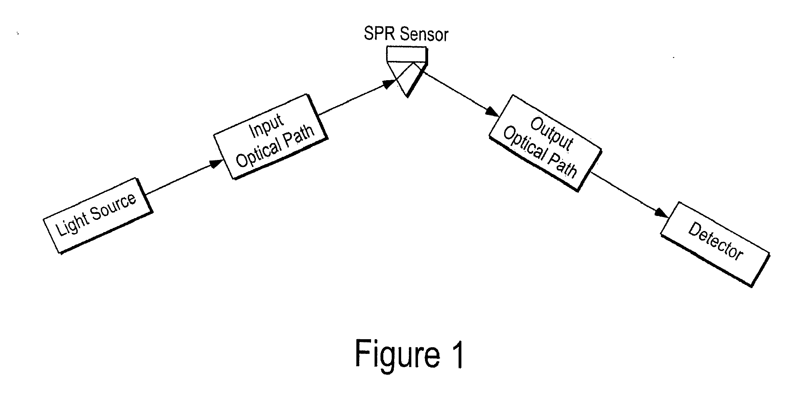

Surface plasmon resonance (SPR) measurement systems are used to detect shifts in refractive indices of samples associated with SPR sensors that are included in the systems. A conventional SPR measurement system (shown in Figure 1) includes a light source that illuminates an SPR sensor through an input optical path. Light reflected by the SPR sensor propagates through an output optical path and is intercepted by a detector. The optical paths typically include telescopes, polarizers, acousto-optic deflectors, and other optical components that add complexity to the SPR measurement systems, especially when the SPR sensor includes an array of sensing elements. To accommodate an array of sensing elements, the output optical path includes an imaging system that mops each sensing element in the array to a corresponding detection element within the detector. The imaging system can increase the manufacturing cost of the SPR measurement system and can limit the physical density of the sensing elements in the array due to the limited registration that can be achieved by a typical imaging system.

The present invention seeks to provide an improved integrated opto-electric sensor.

According to an aspect of the present invention there is provided an integrated opto-electric sensor as specified in claim 1.

An integrated opto-electric SPR sensor according to embodiments of the present invention can eliminate the need for the output optical path of conventional SPR measurement systems, which can reduce the cost and complexity of making SPR measurements. The integrated opto-electric sensor includes a wavenumber matching structure that is integrated onto a silicon substrate. A first conductive electrode has a first surface adjacent to a region in the silicon substrate to form a Schottky junction. A dielectric is positioned adjacent to a second surface of the first conductive electrode. The first conductive electrode and a second conductive electrode formed at the silicon substrate provide coupling for a detected signal that is generated in response to illumination of the wavenumber matching structure by an optical signal:

Embodiments of the present invention are described below, by way of example only, with reference to the accompanying drawings, in which:
Figure 1 shows a conventional SPR measurement system that includes an output optical path.
Figure 2 shows a system suitable for making SPR measurements that includes an integrated opto-electric sensor according to embodiments of the present invention.
Figures 3A-3C show examples of output signals provided by the integrated opto-electric sensor according to embodiments of the present invention.
Figure 4 shows a detailed cross-sectional view of an integrated opto-electric sensor according to embodiments of the present invention.
Figures 5A-5C show alternative examples of wavenumber matching structures suitable for inclusion in the integrated opto-electric sensor according to embodiments of the present invention.
Figure 6 shows an integrated opto-electric sensor including an array of sensing elements, according to alternative embodiments of the present invention.
Figure 7A shows an integrated opto-electric sensor according to alternative embodiments of the present invention, wherein an array of sensing elements is illuminated by a collimated optical beam.
Figure 7B shows an integrated opto-electric sensor according to alternative embodiments of the present invention, wherein an array of sensing elements is illuminated by a divergent optical beam.

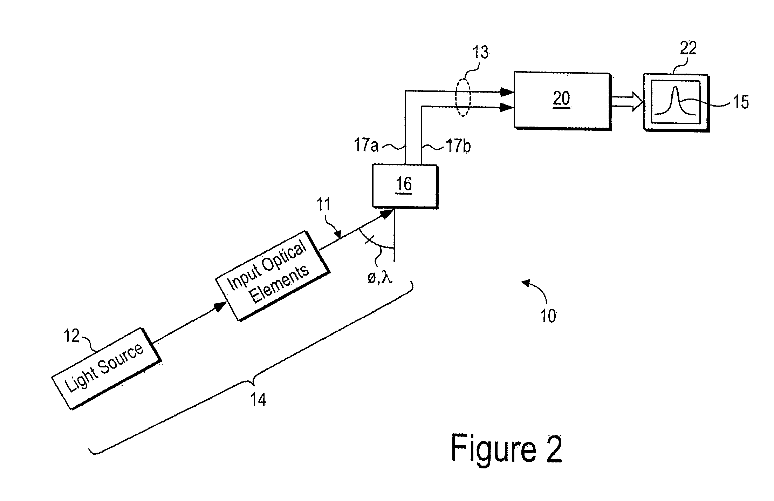

Figure 2 shows a system 10 suitable for making SPR measurements. The system 10 includes a light source 12, an input optical path 14, and an integrated opto-electric sensor 16 according to embodiments of the present invention. For the purpose of illustration, the integrated opto-electric sensor 16 is shown in a system 10 having a light source 12 and optical elements 18 typical of the conventional surface plasmon resonance (SPR) measurement system shown in Figure 1. Examples of light sources 12 and optical elements 18 suitable for the system 10 are disclosed in a variety of references, including Optical Biosensors: Present and Future, Edited by F.S. Ligler and C.A. Rowe Taitt, Elsevier Science B. V., pages 207-247. The light source 12 typically includes a continuous-wave (CW) laser, a wavelength-swept laser, a modulated laser source,a light emitting diode (LED), a super-luminescent light emitting diode (SLED), a white light source, or any other type of emitter or source that provides an optical signal 11 suitable for exciting a surface plasmon in the integrated opto-electric sensor 16.

The light source 12 provides illumination of the integrated opto-electric sensor 16 through the input optical path 14. The optical signal 11 is typically swept in wavelength λ over a wavelength range, or swept in incidence angle Φ over an incident angle range. In addition to being swept in wavelength λ or swept in incidence angle Φ, the optical signal 11 can also be modulated to reduce interference effects in the system 10.

In response to illumination by the optical signal 11, the integrated opto-electric sensor 16 provides a detected signal 13 that is coupled by a pair of conductive electrodes 17a, 17b to a processor 20, or to another device, element, or system that is separate from, or integrated into, the integrated opto-electric sensor 16. The detected signal 13 is an electrical signal with characteristics that depend on the polarization, the incidence angle Φ, and the wavelength λ of the optical signal 11 that illuminates the integrated opto-electric sensor 16. Under a resonance condition, surface plasmons that are excited in the integrated opto-electric sensor 16 are represented in detected signal 13.

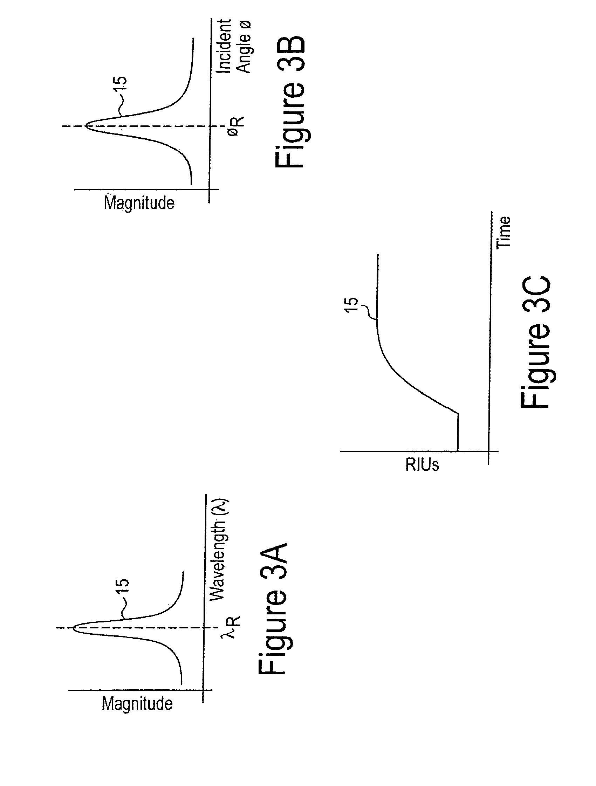

The detected signal 13 is provided to a processor 20 that is coupled to the integrated opto-electric sensor 16. The processor 20 processes the detected signal 13 and provides an output signal 15 on a display or other output device 22. According to one embodiment of the present invention, the optical signal 11 is swept in wavelength λ and the output signal 15 indicates shifts in the resonant wavelength λ_{R} associated with a sample 34 within the integrated opto-electric sensor 16, as shown in the example output signal 15 of Figure 3A. According to another embodiment of the present invention, the optical signal 11 is swept in incidence angle Φ, and the output signal 15 indicates shifts in the resonant incidence angle Φ_{R} associated with the sample 34 within the integrated opto-electric sensor 16, as shown in the example output signal 15 of Figure 3B. According to alternative embodiments of the present invention, the processor 20 uses detected shifts in resonant wavelength λ_{R} or detected shifts in resonant incidence angle Φ_{R} to indicate changes in refractive index units (RIUs) of the sample 34 as a function of time. The changes in RIUs can be used to determine binding kinetics of the sample 34 within the integrated opto-etectric sensor 16. An example of this type of output signal 15 is shown in Figure 3C.

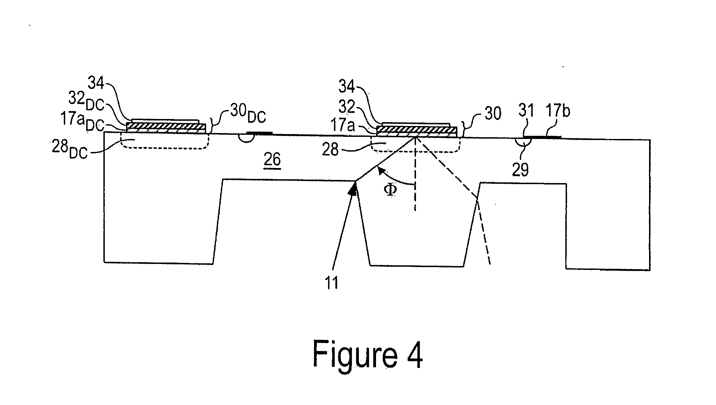

Figure 4 shows a detailed cross-sectional view of the integrated opto-electric sensor 16 according to embodiments of the present invention. The integrated opto-electric sensor 16 is implemented using CMOS semiconductor processes, silicon bipolar processes, or any other silicon processes or fabrication techniques suitable for integrating devices or elements onto a silicon substrate 26.

The integrated opto-electric sensor 16 includes a wavenumber matching structure 24 that is integrated into the substrate 26. The wavenumber matching structure 24 has a high enough refractive index and a corresponding cross-sectional shape to enable an incident angle Φ at the conductive electrode 17a to be sufficiently large to excite a surface plasmon in the integrated opto-electric sensor 16 when the optical signal 11 has a suitable polarization and has a suitable wavelength λ. Under a resonance condition, the wavenumber matching structure 24 matches the wavenumber of the optical signal 11 to the wavenumber of the surface plasmon to provide coupling of optical energy from the optical signal 11 into the surface plasmon.

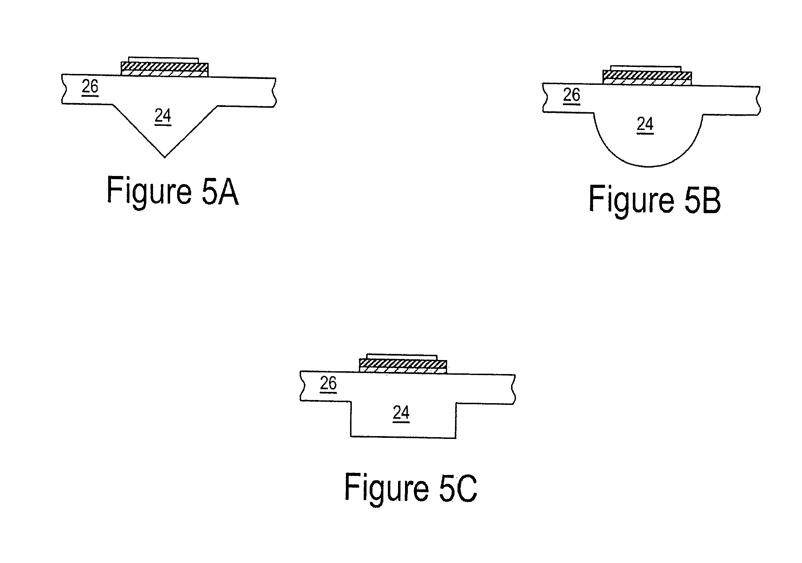

The wavenumber matching structure 24 shown in Figure 4 has a trapezoidal cross section, which can be formed using KOH etching or other silicon fabrication techniques. The wavenumber matching structure 24 alternatively has a triangular, rectangular, or curved cross section, as shown in Figures 5A-5C. However, the wavenumber matching structure 24 has alternative cross-sectional shapes with suitable optical properties to support excitation of a surface plasmon at the conductive electrode 17a.

The conductive electrode 17a is formed on the substrate 26, adjacent to an undoped, or lightly doped, region 28 in the substrate 26, to form a Schottky junction. In a first example, the wavenumber matching structure 24 and the substrate 26 are formed by lightly doped silicon and a n+ epitaxial layer grown on the lightly doped silicon, with the region 28 grown on the n+ epitaxial layer. In a second example, the wavenumber matching structure 24 and the substrate 26 are formed from an n layer and the region 28 is formed with an implanted p doping to provide for a net reduction in the n doping in the region 28. In alternative examples, the wavenumber matching structure 24, the substrate 26, and the region 28 are formed with complementary doping to that of the first example and the second example, with p doping instead of the indicated n doping, and with n doping instead of indicated p doping. Typical n doping is provided using Arsenic and or Phosphorus, and typical p doping is provided using Boron. However, n doping and p doping can also be provided using alternative or additional elements, or combinations of alternative or additional elements.

The region 28 prevents current leakage at the interface between the conductive electrode 17a and the region 28. The conductive electrode 17a is sufficiently thin to support excitation of a surface plasmon and a resulting generated evanescent wave that penetrates a dielectric 30. In the example shown in Figure 4, the conductive electrode 17a has a thickness typically between 30-50 nm, and a typical length and width of 0.1 mm when the conductive electrode 17a is fabricated using aluminum and a typical length and width of 1 mm when the conductive electrode 17a is fabricated using gold. The conductive electrode 17a is shown having two flat surfaces, with the first surface adjacent to the region 28 of the substrate 26 and with the second surface adjacent to the dielectric 30.

The dielectric 30 typically includes a binding layer 32 and the sample 34. The sample 34 can include analytes provided to the binding layer 32 via microfluidic channels, or integrated micro-fluidic cartridges. Alternatively, the sample 34 can include one or more analytes that are deposited or otherwise positioned on the binding layer 32, as shown in Figure 4. There are a variety of known interfaces that are provided by the conductive electrode 17a and the dielectric 30 that are suitable for supporting excitation of surface plasmons by the optical signal 11.

The integrated opto-electric sensor 16 also includes the conductive electrode 17b, typically formed by a metal conductor 31 coupled to a p+ doped region 29 positioned within the substrate 26. The p+ doped region 29 reduces contact resistance between the metal conductor 31 and the substrate 26, to form a low-resistance ohmic contact.

The detected signal 13 typically includes a photocurrent, generated at the Schottky junction, which flows between the conductive electrodes 17a, 17b. Photons provided by the optical signal 11 excite a surface plasmon at the conductive electrode 17a, which increases the energy of electrons in the conductive electrode 17a. As a result, more of the electrons at the conductive electrode 17a gain sufficient energy to cross the energy barrier of the Schottky junction formed by the region 28 and conductive electrode 17a to provide the photocurrent.

The photons of the optical signal 11 pass through the wavenumber matching structure 24 and substrate 26 relatively unattenuated, due to the energy of the photons of the optical signal 11 being less than the bandgap energy of the silicon in the substrate 26. The substrate 26 and wavenumber matching structure 24 of the integrated opto-electric sensor 16, typically accommodate optical signals 11 having wavelengths that are greater than 1100 nm.

According to the embodiment of the integrated opto-electric sensor 16 shown in Figure 4, the integrated opto-electric sensor 16 includes an integrated dark current sensor 36. The dark current sensor 36 has a conductive electrode 17a_{DC}, an undoped, or lightly doped, region 28_{DC}, and a dielectric 30_{DC} that are equivalent to the conductive electrode 17a, the region 28, and the dielectric 30, respectively. The dark current sensor 36 is typically not illuminated by the optical signal 11, which enables the detected signal 13 to be a differential signal that results from a comparison or subtraction of the photocurrent on the conductive electrodes 17a, 17b, with a dark current on the conductive electrodes 17a_{DC}, 17b_{DC} provided by the dark current sensor 36 providing a reference for the detected signal 13. The dark current sensor 36 can also be illuminated by the optical signal 11, however, due to the absence of a wavenumber matching structure in the dark current sensor 36 a surface plasmon is not excited within the dark current sensor 36. According to alternative embodiments of the present invention, the integrated opto-electric sensor 16 does not include a dark current sensor 36.

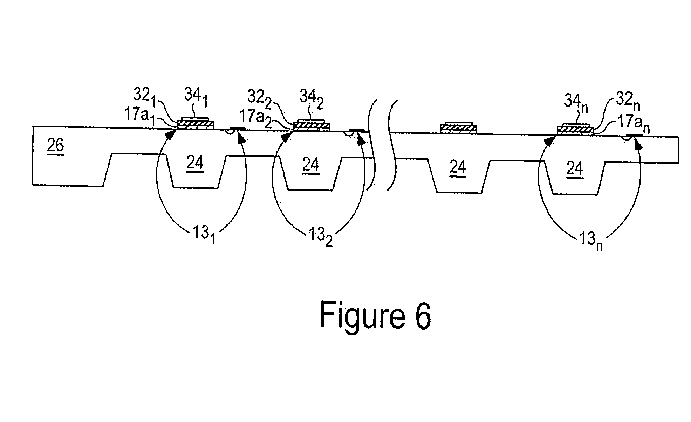

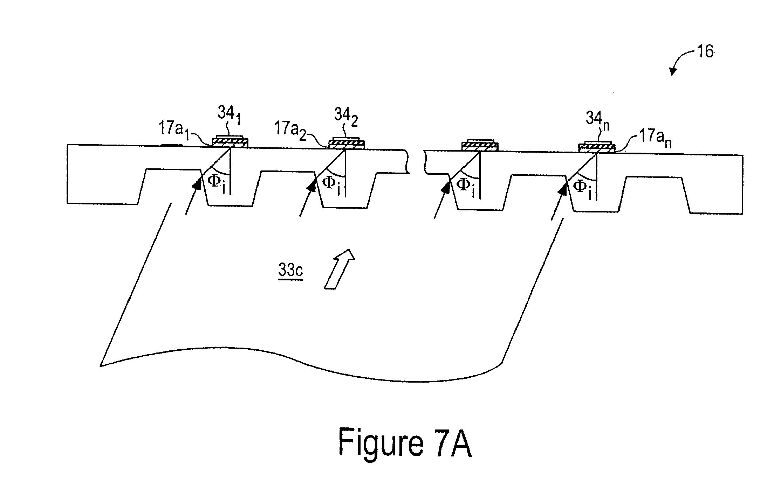

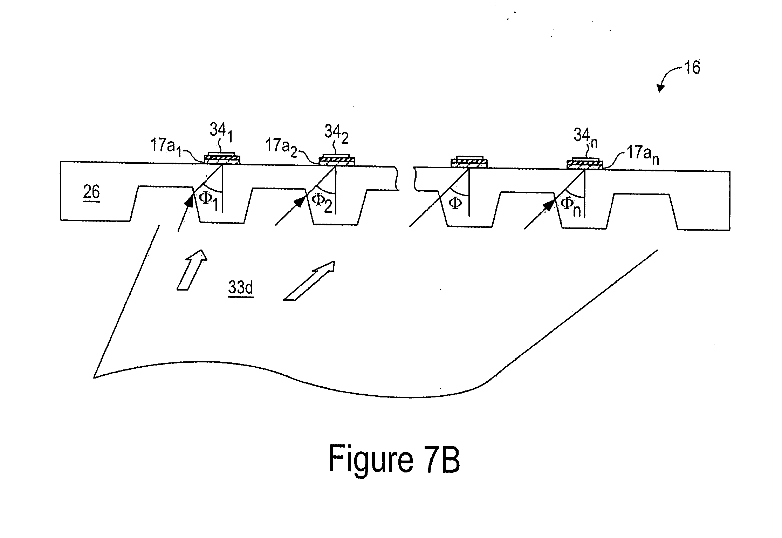

Figure 6 shows an integrated opto-electric sensor 16 according to embodiments of the present invention wherein the integrated opto-electric sensor 16 includes an array of sensing elements. The array of sensing elements includes conductive electrodes 17a₁-17aₙ, and a corresponding array of dielectrics 30₁-30ₙ. Typically, each of the dielectrics 30₁-30ₙ includes a corresponding binding layer 32₁-32ₙ and sample 34₁-34ₙ, so that a series of detected signals 13₁-13ₙ can be provided in response to illumination by one or more optical signals 11. According to embodiments of the present invention shown in Figure 7A, the optical signal 11 includes a collimated optical beam 33c that illuminates each of the conductive electrodes 17a₁-17aₙ at an incidence angle Φᵢ that is common among the conductive electrodes 17a₁-17aₙ, to the extent of the collimation of the collimated optical beam. Typically, the samples 34₁-34ₙ include one or more types of analytes, which enables the integrated opto-electric sensor 16 to characterize multiple types of analytes in parallel or sequentially. According to embodiments of the present invention shown in Figure 7B, the optical signal 11 includes a divergent optical beam 33d that illuminates each of the conductive electrodes 17a₁-17aₙ at a different incidence angles Φ₁-Φₙ, to the extent of the divergence of the divergent optical beam. Typically, the samples 34₁-34ₙ include one type of analyte, which enables the integrated opto-electric sensor 16 to characterize the analyte over a range of incidence angles without the light source 12 sweeping the incidence angle Φ of the optical signal 11.

While the processor 20 is shown as a separate element of the system 10 in Figure 2, amplifiers, digital signal processors, or other devices, elements or systems included in the processor 20 are alternatively integrated into integrated opto-electric sensor 16.

The disclosures in United States patent application No. 11/222,206 from which this application claims priority, and in the abstract accompanying this application are incorporated herein by reference.

## Claims

1. An integrated opto-electric sensor including:
a wavenumber matching structure (34) integrated onto a silicon substrate (26);
a first conductive electrode (17a) with a first surface adjacent to one of a lightly doped and an undoped region in the silicon substrate (26) to form a Schottky junction;
a dielectric (30) adjacent to a second surface of the first conductive electrode (17a); and
a second conductive electrode (17b) formed at the silicon substrate wherein the first conductive electrode and the second conductive electrode provide coupling for a detected signal provided in response to illumination of the wavelength matching structure by an optical signal.

2. A sensor according to claim 1, wherein the detected signal includes a photocurrent generated at the Schottky junction.

3. An integrated opto-electric sensor according to claim 1 or 2, wherein the dielectric (30) includes a binding layer (32) and a sample (34).

4. A sensor according to claim 1, 2 or 3, wherein the wavenumber matching structure (34) has one of a rectangular, trapezoidal, triangular, or curved cross-section.

5. A sensor according to claim 3, wherein the optical signal has a wavelength, an incidence angle and a polarization sufficient to excite a surface plasmon at the first conductive electrode (17a).

6. A sensor of claim 5, including a processor for receiving a detected signal and for processing the detected signal to provide an output signal that indicates (i) shifts in at least one of a resonant wavelength and a resonant incidence angle associated with the sample or (ii) changes in refractive index units (RIUs) of the sample as a function of time.

7. A sensor according to any preceding claim, including a dark current sensor (36) integrated into the silicon substrate.

8. A sensor according to claim 7, wherein the dark current sensor (36) provides a dark current reference for the detected signal.

9. A sensing device including an array of opto-electric elements according to any preceding claim.

10. A device according to claim 9, wherein the optical signal includes a collimated optical beam, and wherein each sensing element in the array is illuminated at a common incidence angle.

11. A device according to claim 9, wherein the optical signal includes a divergent optical beam, and wherein each sensing element in the array is illuminated at a different incidence angle.

12. A device according to claim 11, wherein the optical signal provides a wavelength, an incidence angle and a polarization sufficient to excite a surface plasmon at the first conductive electrode.

13. A device according to claim 12, wherein the optical beam provides a range of incidence angles that includes a resonant incident angle.
